# EUROPÄISCHE PATENTANMELDUNG

(11) **EP 2 439 447 A1**
(43) Veröffentlichungstag der Anmeldung: **11.04.2012**
(21) Anmeldenummer: 10186501.2
(22) Anmeldetag: 05.10.2010
(51) Int. Cl.: F23D 11/12, F23D 14/08, F23D 14/58, F23R 3/34, F23R 3/36, F02M 61/18

(54) **Brennstoffdüse, Gasturbinenbrennkammer und Brenner mit einer solchen Brennstoffdüse**

(71) Anmelder: SIEMENS AKTIENGESELLSCHAFT, 80333 München (DE)
(72) Erfinder: Gruschka, Uwe, 41564, Kaarst (DE); van Kampen, Jaap, 6042 AR, Roermond (NL); Fox, Timothy A., Hamilton, Ontario, Canada L8P 3P1 (CA); Williams, Steven, Burlington, Ontario L7T 4E8 (CA); Wörz, Ulrich, Oviedo, FL, 32765 (US)
(74) Vertreter: Maier, Daniel Oliver

(57) **Zusammenfassung**

Die Erfindung betrifft eine Brennstoffdüse umfassend ein zylindrisches Düsenrohr (1), in welches ein Fluid eingeströmt wird, und ein stromabwärts des Düsenrohrs (1) angeordneter konvex ausgebildeter Düsendeckel (2) mit einem Mittelpunkt (3), wobei der Düsendeckel (2) mehrere Durchlassöffnungen (4a,4b) aufweist, durch welche das in das Düsenrohr (1) eingeströmte Fluid austritt, wobei die Durchlassöffnungen (4a,4b) auf zumindest zwei Kreislinien (5a, 5b) mit unterschiedlichen radialen Abstand (R1,R2) zum Mittelpunkt (3) angeordnet sind.

## Beschreibung

Die Erfindung betrifft eine Brennstoffdüse nach dem Oberbegriff des Anspruchs 1. Weiterhin betrifft die Erfindung eine Gasturbinenbrennkammer mit einer solchen Brennstoffdüse nach dem Anspruch 6. Zudem betrifft die Erfindung einen Brenner nach Anspruch 7.

Im Hinblick auf die weltweiten Bemühungen zur Senkung des Schadstoffausstoßes von Feuerungsanlagen, insbesondere bei Gasturbinen, wurden in den letzten Jahren Brenner und Betriebsverfahren für Brenner entwickelt, welche besonders geringe Ausstöße an Stickoxiden (NOx) haben. Dabei wird vielfach Wert darauf gelegt, dass solche Brenner jeweils nicht nur mit einem Brennstoff, sondern möglichst mit verschiedenen Brennstoffen, beispielsweise Öl, Erdgas und/oder niederkalorischen Brennstoffen, welche nachfolgend auch als Synthesegas bezeichnet werden, wahlweise einzeln oder in Kombination betreibbar sind, um die Versorgungssicherheit und Flexibilität beim Betrieb zu erhöhen.

Synthesegas-Brenner zeichnen sich dadurch aus, dass in ihnen Synthesegas als Brennstoff verwendet wird. Verglichen mit den klassischen Gasturbinenbrennstoffen Erdgas und Erdöl, die im Wesentlichen aus Kohlenwasserstoffverbindungen bestehen, sind die brennbaren Bestandteile von Synthesegas im Wesentlichen Kohlenmonoxid und Wasserstoff. Zum wahlweisen Betrieb einer Gasturbine mit Synthesegas aus einer Vergasungseinrichtung und einem Zweit- oder Ersatzbrennstoff muss der Brenner in der der Gasturbine zugeordneten Brennkammer dann als Zweioder Mehrbrennstoffbrenner ausgelegt sein, der sowohl mit dem Synthesegas als auch mit dem Zweitbrennstoff, z.B. Erdgas je nach Bedarf beaufschlagt werden kann. Die Ausbildung eines Brenners als Mehrbrennstoffbrenner ist zudem für die Verfügbarkeit der Gasturbinenleistung bei Schwankungen des Heizwertes im Synthesegas, notwendig. Der jeweilige Brennstoff wird hierbei über eine Brennstoffpassage im Brenner der Verbrennungszone zugeführt.

Bisherige Mehrbrennstoffbrenner weisen eine Brennstoffdüse auf, welche ein Düsenrohr, das mit einer ersten Brennstoffzufuhrleitung für Gas, hier nachfolgend als Erdgas bezeichnet, in Verbindung steht, und einen Düsendeckel mit einem Mittelpunkt und Durchlassöffnungen, durch welche das Erdgas in eine Brennkammer einströmen kann. Die Durchlassöffnungen sind dabei in Umfangsrichtung auf einer Kreislinie angeordnet in dem Düsendeckel angebracht. Zwischen den Durchlassöffnungen im Düsendeckel bildet sich im Düsendeckel ein sogenannter Steg mit einer hinreichenden Stegbreite aus.

Bisher war es nicht notwendig, den Düsendeckel mit den Durchlassöffnungen zu kühlen. Wird nun zusätzlich zum Ergasbetrieb Synthesegas verwendet, so wird radial beabstandet um das Düsenrohr ein Außenmantel angeordnet, welcher mit dem Düsenrohr einen Ringspalt ausbildet. Der Ringspalt steht mit einer zweiten Brennstoffzufuhrleitung zum Zuführen von Synthesegas zu dem Ringspalt in Verbindung. In einer solchen Anordnung erhitzt sich der Düsendeckel stark, insbesondere im Teillastbetrieb, da hier der Impuls des durch den Düsendeckel strömenden Brennstoffs sehr niedrig ist. Durch die Erhitzung erwärmt sich der Düsendeckel derart, dass sich thermische Spannungen in ihm ausbilden, welche zu Verschleiß führen. Dies reduziert die Lebensdauer der gesamten Brennstoffdüse.

Es ist daher eine erste Aufgabe der Erfindung eine Brennstoffdüse anzugeben, die sich durch eine hohe Lebensdauer auszeichnet. Eine weitere Aufgabe ist die Angabe einer Gasturbinenbrennkammer mit einer solchen Brennstoffdüse. Eine dritte Aufgabe ist die Angabe eines Brenners mit einer solchen Brennstoffdüse.

Die erste Aufgabe wird gelöst durch die Angabe einer Brennstoffdüse nach Anspruch 1. Die zweite Aufgabe wird gelöst durch die Angabe einer Gasturbinenbrennkammer nach Anspruch 6. Die dritte Aufgabe wird gelöst durch die Angabe eines Brenners nach Anspruch 7.

Erfindungsgemäß weist eine Brennstoffdüse einen Düsendeckel mit einem Mittelpunkt auf, wobei der Düsendeckel mehrere Durchlassöffnungen umfasst, durch welche das in das Düsenrohr eingeströmte Fluid austritt und wobei die Durchlassöffnungen auf zumindest zwei Kreislinien mit unterschiedlichem radialen Abstand zum Mittelpunkt angeordnet sind. Dadurch ergibt sich eine bessere Kühlung des Düsendeckels, insbesondere um den Mittelpunkt herum, ohne dass die Stabilität der Verbrennung in einer der Brennstoffdüse stromabwärts angeordneten Brennkammer abnimmt. Somit können thermische Spannungen vermieden werden und die Lebensdauer der Düse erhöht werden. Zudem können nun zur besseren Kühlung mehr Durchlassöffnungen im Düsendeckel, als dies bei der Düse des Stands der Technik der Fall ist, angeordnet werden, da eine hinreichende Stegbreite auch bei mehr Durchlassöffnungen gewährleistet ist.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren 1 bis 8.
- Fig. 1: zeigt eine erfindungsgemäße Brennstoffdüse im Querschnitt.
- Fig. 2: zeigt einen erfindungsgemäßen Düsendeckel.
- Fig. 3: zeigt die erfindungsgemäße Brennstoffdüse schematisch mit den verschiedenen Öffnungswinkeln der Durchlassöffnungen.
- Fig. 4: zeigt ausschnittsweise einen Düsendeckel mit Durchlassöffnung und einer Einlauftrompete mit Brennstoffinjektor nach einem ersten Ausführungsbeispiel.
- Fig. 5: zeigt ausschnittsweise einen Düsendeckel mit Durchlassöffnung und einer Einlauftrompete mit Brennstoffinjektor nach einem zweiten Ausführungsbeispiel.

- Fig. 6: zeigt ausschnittsweise einen Düsendeckel mit Durchlassöffnung und einer Einlauftrompete.
- Fig. 7: zeigt eine Brennstoffdüse in einem Synthesegasbrenner.
- Fig. 8: zeigt eine Brennstoffdüse in einer Gasturbinenbrennkammer.

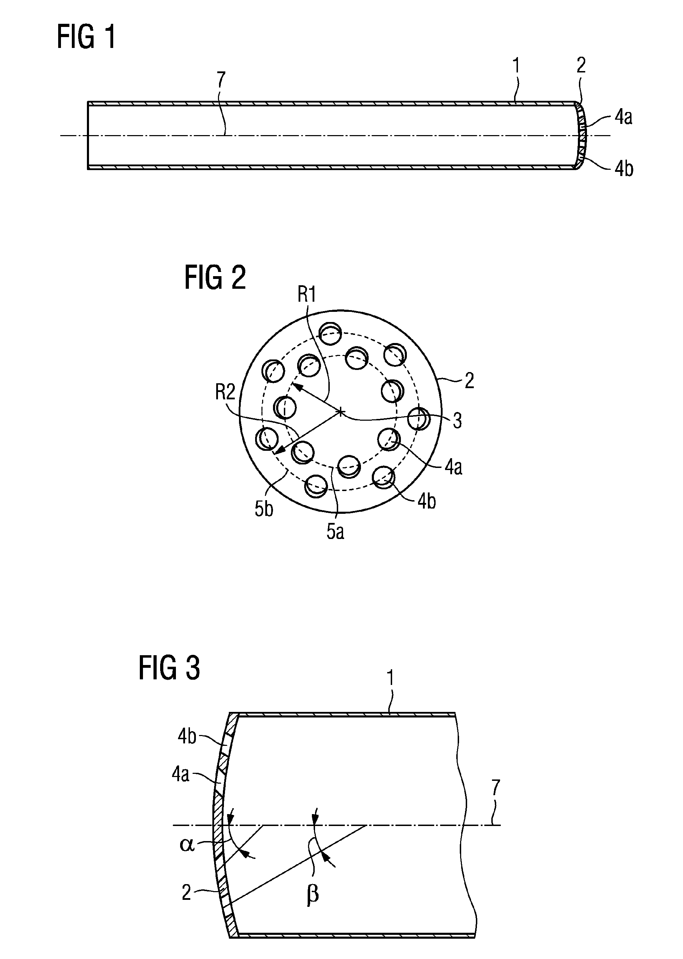

Fig. 1 zeigt eine Brennstoffdüse mit einem zylindrischen Düsenrohr 1 und einem konvexen Düsendeckel 2. Die Brennstoffdüse 1 weist eine Zylinderachse 7 auf. In die Brennstoffdüse 1 wird ein Fluid, insbesondere ein Brennstoff eingebracht, welcher anschließend durch die Durchlassöffnungen 4a, 4b in eine nachgeschaltete, nicht gezeigte Brennkammer austritt.

Fig. 2 zeigt einen Düsendeckel 2 von vorne. Der Düsendeckel 2 weist einen Mittelpunkt 3 auf. Der Düsendeckel 2 weist zudem mehrere Durchlassöffnungen 4a, 4b auf. Die Durchlassöffnungen 4a, 4b sind auf zumindest zwei Kreislinien 5a, 5b mit unterschiedlichem radialem Abstand R1, R2 zum Mittelpunkt 3 angeordnet. Dabei sind die Durchlassöffnungen 4a auf der Kreislinie 5a mit einem Radius R1 zum Mittelpunkt 3 angeordnet. Dabei wird die Kreislinie 5a mit dem kleineren Radius R1 als radial innere Kreislinie 5a bezeichnet. Verglichen mit der Düse des Stands der Technik wird durch die Durchlassöffnungen 4a, welche auf der radial inneren Kreislinie 5a liegen, nun mehr Brennstoff oder, falls der Brennstoff vorgemischt ist, mehr Brennstoff-Luftgemisch zu dem Mittelpunkt 3 des Düsendeckels 2 transportiert. Dies verhindert ein Überhitzen des Düsendeckels 2, insbesondere um den Mittelpunkt 3 herum. Zudem wird dadurch ein Flammenrückschlag verhindert. Dadurch wird die Temperatur des Düsendeckels 2 im Vergleich zu der Düse im Stand der Technik reduziert. Gleichzeitig weisen die Durchlassöffnungen 4a auf der Kreislinie 5a die gleiche radiale Einströmung wie die Durchlassöffnungen 4b auf der anderen Kreislinie 5b auf.

Der Abstand der Durchlassöffnungen 4a bzw. 4b im Düsendeckel 2 wird so im Vergleich zur Düse des Stands der Technik erhöht. Dadurch erhöht sich auch die Stegbreite zwischen den Durchlassöffnungen 4a bzw. 4b. Dies reduziert die Gefahr der Rissbildung. Zudem ist, bei einem gleichbleibenden Umfang des Düsendeckels 2, die Anzahl der gesamten Durchlassöffnungen 4a, 4b höher, als dies bei der Düse des Stands der Technik der Fall ist. Zudem kann der Durchmesser der Durchlassöffnungen 4a bzw. 4b erhöht werden, ohne dass die Stegbreite zwischen den Durchlassöffnungen 4a bzw. 4b zueinander zu gering wird. Durch die größere Anzahl an Durchlassöffnungen 4a, 4b und wahlweise zudem durch den größeren Durchmesser der Durchlassöffnungen 4a, 4b kann eine effizientere Kühlung in dem Düsendeckel 2 durch eine verbesserte Verteilung des durch die Durchlassöffnungen 4a, 4b strömenden Fluids erzielt werden. Dadurch wird eine verbesserte Kühlung, insbesondere um den Mittelpunkt 3 des Düsendeckels 2, erzielt. Zudem wird durch eine größere Anzahl an Durchlassöffnungen 4a, 4b und wahlweise zudem durch den größeren Durchmesser der Durchlassöffnungen 4a, 4b die Düsendeckelfläche selbst verkleinert; dass heißt die Flamme in der Brennkammer (nicht gezeigt) hat weniger Fläche im Düsendeckel 2 an der sie angreifen und auch anhaften könnte und diese dadurch beschädigen könnte.

Ein weiterer Vorteil der erfindungsgemäßen Brennstoffdüse liegt darin, dass durch die Anordnung der Durchlassöffnungen auf den verschiedenen Kreislinien 5a, 5b der gesamte Druckverlust an den Durchlassöffnungen 4a, 4b niedriger ist als der gesamte Druckverlust an den Durchlassöffnungen der Brennstoffdüse des Stands der Technik. Dadurch ergibt sich eine stabilere Verbrennung.

Die Durchlassöffnungen 4a, 4b auf einer Kreislinie 5a, 5b weisen zueinander einen äquidistanten Abstand auf. Dadurch ergibt sich eine symmetrische Einströmung des Brennstoffs in die nachgeschaltete Brennkammer (nicht gezeigt). Dies ist für eine gleichmäßige Verbrennung des Brennstoffs notwendig.

Die Durchlassöffnungen 4a auf der einen Kreislinie 5a sind bezogen die Durchlassöffnungen 4b auf der anderen Kreislinie 5b um einen Winkel versetzt angeordnet. Die Anzahl der Durchlassöffnungen 4a,4b auf den zwei Kreislinien 5a,5b können gleich aber auch unterschiedlich sein (nicht gezeigt). Ebenso können die Durchlassöffnungen 4a,4b unterschiedliche oder gleiche Durchmesser (nicht gezeigt) aufweisen.

Fig. 3 zeigt einen schematischen Querschnitt durch eine Brennstoffdüse mit Düsenrohr 2 mit Zylinderachse 7 und Düsendeckel 2. Fig. 3 zeigt zudem, dass die Durchlassöffnungen 4a, 4b auf den unterschiedlichen Kreislinien 5a, 5b jeweils einen unterschiedlichen Öffnungswinkel α,β mit der Zylinderachse 7 ausbilden. Dabei weisen die Durchlassöffnungen 4a auf der radial inneren Kreislinie 5a einen größeren Öffnungswinkel α auf als die Durchlassöffnungen 4b, welche auf der radial äußeren Kreislinie 5b angeordnet sind. So können beispielsweise die Durchlassöffnungen 4a einen Öffnungswinkel α =45° und die Durchlassöffnungen 4b einen Öffnungswinkel β=30° aufweisen. Dies bewirkt, dass die Durchlassöffnungen 4a auf der Kreislinie 5a die gleiche radiale Einströmung des Brennstoffs aufweist, wie die Durchlassöffnungen 4b auf der Kreislinie 5b. Dadurch bildet sich in der Brennkammer (nicht gezeigt) eine stabile, heiße Rezirkulationszone des Brennstoffes bzw. des Brennstoff-Luftgemisches aus. Die Rezirkulationszone wird durch das Fluid, welches durch die zusätzlichen Durchlassöffnungen 4a in die Brennkammer (nicht gezeigt) eingeströmt wird, sozusagen vom Düsendeckel 2 weggedrückt. Somit wird eine Berührung des Düsendeckels 2 durch die heiße Rezirkulationszone weitestgehend vermieden. Dadurch werden sehr hohe Temperaturen im Düsendeckel 2 vermieden. Der Öffnungswinkel der Durchlassöffnungen 4a,4b auf den unterschiedlichen Kreislinien 5a, 5b wird dabei immer so gewählt, dass die Durchlassöffnungen 4a auf der Kreislinie 5a die gleiche radiale Einströmung des Fluids in die Brennkammer (nicht gezeigt) aufweist, wie die Durchlassöffnungen 4b auf der Kreislinie 5b.

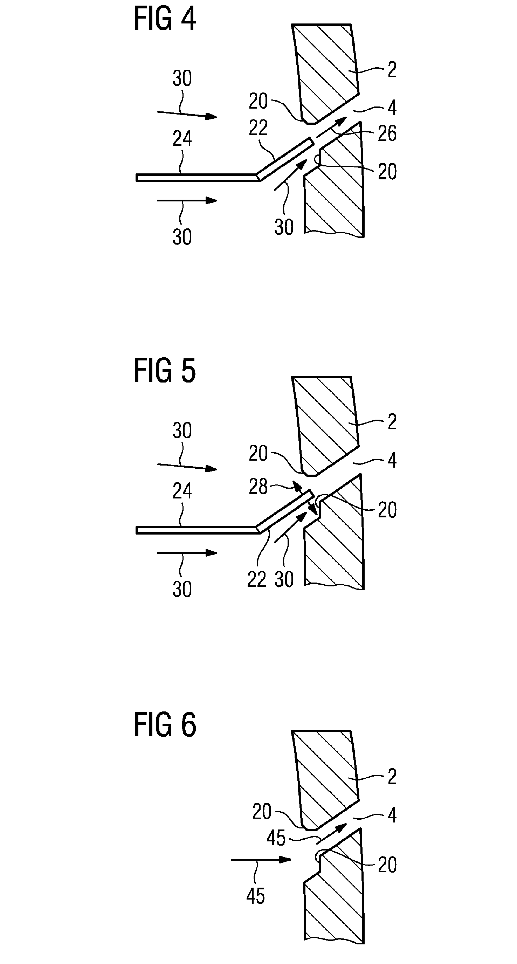

Fig. 4 zeigt beispielhaft stellvertretend für mehrere, insbesondere alle Durchlassöffnungen 4a,4b (Fig. 2) eine Durchlassöffnung 4, welche stromaufwärts eine Einlauftrompete 20 ("bellmouth") aufweist. In die Einlauftrompete 20 kann ein Brennstoffinjektor 22 weisen, welcher von einer zentral in dem Düsenrohr 1 (Fig.1) angeordneten Brennstoffzufuhrleitung 24 gespeist wird. Das Fluid, welches durch das Düsenrohr 1 (Fig. 1) geleitet wird, ist hier Verdichterluft 30. Durch den Brennstoffinjektor 22 wird an den Durchlassöffnungen 4 Brennstoff in die durch das Düsenrohr 1 (Fig. 1) strömende Verdichterluft 30 eingebracht. Das so entstehende Brennstoff-Luftgemisch tritt dann in die Brennkammer (nicht gezeigt) ein. Dabei kann der Brennstoff, welcher durch den Brennstoffinjektor 22 in die Durchlassöffnung 4 eingebracht wird, eine parallele Einströmrichtung 26 zur Verdichterluft 30 aufweisen (Fig. 4) oder eine senkrechte Einströmrichtung 28 (Fig. 5) zur Verdichterluft 30 aufweisen. Liegt eine parallele Einströmrichtung 26 (Fig. 4) vor, so weist das aus der Brennstoffdüse in die Brennkammer (nicht gezeigt) eintretende Brennstoff-Luftgemisch vorteilhafterweise einen größeren Impuls auf als z.B. bei einer senkrechten Einströmung 28 (Fig. 5), was sich positiv auf die Verbrennung auswirkt.

Fig. 6 zeigt eine Durchlassöffnung 4 mit Einlauftrompete 20 ohne Brennstoffinjektor 22 (Fig.4 und 5). Hier wird als Fluid ein Brennstoff-Luftgemisch 45 durch die Durchlassöffnung 4 in die Brennkammer (nicht gezeigt) eingebracht, dass heißt, es fand bereits in dem Düsenrohr 1 (Fig. 1) oder noch stromaufwärts des Düsenrohrs 1 (Fig. 1) eine Vermischung von Brennstoff mit Luft statt. Dabei bewirkt eine Einlauftrompete 20, wie sie beispielsweise in Fig. 4-6 gezeigt wurde, dass in der Durchlassöffnung 4 keine Rezirkulation stattfindet. Dadurch wird ein Flammenrückschlag vermieden. Ebenso ist es möglich Brennstoff, z.B. Erdgas, Synthesegas oder auch Flüssigbrennstoff durch die Durchlassöffnung 4 mit der Einlauftrompete 20 hindurchzuführen.

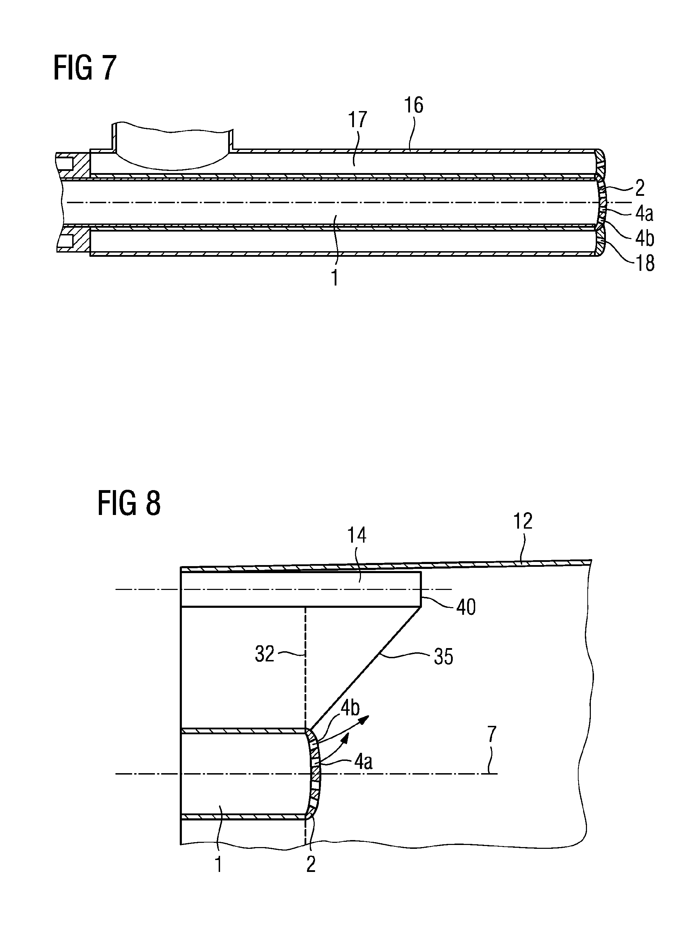

Fig. 7 zeigt die erfindungsgemäße Brennstoffdüse als Mehrbrennstoffdüse. Das Düsenrohr 1 steht dabei mit einer ersten Brennstoffzufuhrleitung in Verbindung zum Zuführen eines ersten Brennstoffes, beispielsweise Erdgas mit Dampf, in das Düsenrohr 1. Radial beabstandet ist um das Düsenrohr 1 ein Außenmantel 16 angeordnet, welcher mit dem Düsenrohr 1 einen Ringspalt 17 mit einer Ringspaltaustrittsöffnung 18 ausbildet. Dabei steht der Ringspalt 17 mit einer zweiten Zufuhrleitung, beispielsweise einer Synthesegaszufuhrleitung, in Verbindung, zum Zuführen von Synthesegas in den Ringspalt 17, wobei das Erdgas und das Synthesegas über die Durchlassöffnungen 4a,4b und die Ringspaltaustrittsöffnung 18 in eine Brennkammer (nicht gezeigt) einströmbar sind. In einer solchen Anordnung ist eine effiziente Kühlung des Düsendeckels 2 (Fig.1), wie sie die erfindungsgemäße Brennstoffdüse bietet besonders vorteilhaft. Zudem sind in einer solchen Anordnung mit einer erfindungsgemäßen Brennstoffdüse die NOx-Emissionen geringer. Gleichzeitig wird die Stabilität einer solchen Verbrennungsanordnung erhöht. Dadurch wiederum kann nun der Dampf im Erdgas um 10% reduziert werden. Dies reduziert den gesamten Fluidmassenstrom durch das Düsenrohr 1. Dadurch ergibt sich vorteilafterweise ein geringerer Druckverlust am Düsendeckel 2.

Fig. 8 zeigt die Brennstoffdüse in einer Gasturbinenbrennkammer. Hier wird die Brennstoffdüse, umfassend einem Düsenrohr 1 und Durchlassöffnungen 4a, 4b im mittleren Abschnitt eines Rohrs 12 angeordnet, das sich an einem Ende zu einer Brennkammer (nicht gezeigt) hin öffnet. Mehrere Hauptbrenner 14 sind im Bezug auf die Radialrichtung um die Brennstoffdüse angeordnet. Dabei umfassen die Hauptbrenner 14 mit in die Brennkammer (nicht gezeigt) weisende Hauptaustrittsöffnungen 40. Die Durchlassöffnungen 4a,4b der Brennstoffdüse weisen in dieselbe Brennkammer (nicht gezeigt). Der Düsendeckel 2 mit den Durchlassöffnungen 4a,4b ist stromaufwärts der Hauptaustrittsöffnungen 14 angeordnet. Dies stabilisiert die Verbrennung. Um die Hauptbrenner 14 mit der Brennstoffdüse zu verbinden, kann ein Konus 35 oder ein gerader Wandabschnitt 32 verwendet werden.

## Patentansprüche

1. Brennstoffdüse umfassend ein zylindrisches Düsenrohr (1), in welches ein Fluid eingeströmt wird, und ein stromabwärts des Düsenrohrs (1) angeordneter, konvex ausgebildeter Düsendeckel (2) mit einem Mittelpunkt (3), wobei der Düsendeckel (2) mehrere Durchlassöffnungen (4a,4b) aufweist, durch welche das in das Düsenrohr (1) eingeströmte Fluid austritt,
**dadurch gekennzeichnet, dass** die Durchlassöffnungen (4a,4b) auf zumindest zwei Kreislinien (5a, 5b) mit unterschiedlichen radialen Abstand (R1,R2) zum Mittelpunkt (3) angeordnet sind.

2. Brennstoffdüse nach Anspruch 1,
**dadurch gekennzeichnet, dass** die Durchlassöffnungen (4a, 4b) auf einer Kreislinie (5a, 5b) einen äquidistanten Abstand aufweisen.

3. Brennstoffdüse nach einem der vorhergehenden Ansprüche,
**dadurch gekennzeichnet, dass** das Düsenrohr (1) eine Zylinderachse (7) aufweist und die Durchlassöffnungen (4a, 4b) auf den unterschiedlichen Kreislinien (5a, 5b) jeweils einen unterschiedlichen Öffnungswinkel (α,β) mit der Zylinderachse (7) ausbilden.

4. Brennstoffdüse nach Anspruch 3,
**dadurch gekennzeichnet, dass** die Durchlassöffnungen (4a) auf derjenigen Kreislinie (5a) mit dem kleineren radialen Abstand (R1) einen größeren Öffnungswinkel (α) aufweisen als die Durchlassöffnungen (4b), welche auf der Kreislinie (5b) mit dem größeren radialen Abstand (R2) angeordnet sind.

5. Brennstoffdüse nach einem der vorhergehenden Ansprüche,
**dadurch gekennzeichnet, dass** die Durchlassöffnungen (4a), welche auf der einen Kreislinie (5a) liegen, bezogen auf die Durchlassöffnungen (4b), welche auf der anderen Kreislinie (5b) liegen, um einen Winkel versetzt angeordnet sind.

6. Brenner mit einer Brennstoffdüse mit Düsenrohr (1) und Durchlassöffnungen (4a,4b) nach einem der Ansprüche 1-5, wobei das Düsenrohr (1) mit einer ersten Brennstoffzufuhrleitung in Verbindung steht, zum Zuführen eines ersten Brennstoffes in das Düsenrohr (1), wobei radial beabstandet um das Düsenrohr (1) ein Außenmantel (16) angeordnet ist, welcher mit dem Düsenrohr (1) einen Ringspalt (17) mit einer Ringspaltaustrittsöffnung (18) ausbildet, wobei der Ringspalt (17) mit einer zweiten Brennstoffzufuhrleitung in Verbindung steht, zum Zuführen eines zweiten Brennstoffs in den Ringspalt (17), wobei der erste Brennstoff und der zweite Brennstoff über die Durchlassöffnungen (4a,4b) und die Ringspaltaustrittsöffnung (18) in eine Brennkammer einströmbar sind.

7. Gasturbinenbrennkammer umfassend einer Brennstoffdüse mit einem Düsendeckel (2) und Durchlassöffnungen (4a,4b) nach einem der Ansprüche 1-6, die im mittleren Abschnitt eines Rohrs (12) angeordnet ist, das sich an einem Ende zu einer Brennkammer hin öffnet, sowie mehrerer Hauptbrenner (14), die im Bezug auf die Radialrichtung um die Brennstoffdüse angeordnet sind, wobei die Hauptbrenner (14) mit in die Brennkammer weisende Hauptaustrittsöffnungen (40) umfasst, wobei die Durchlassöffnungen (4a,4b) der Brennstoffdüse in dieselbe Brennkammer weisen,
**dadurch gekennzeichnet, dass** der Düsendeckel (2) mit den Durchlassöffnungen (4a,4b) stromaufwärts der Hauptaustrittsöffnungen (14) angeordnet ist.
